(19)

Europäisches
Patentamt
European
Patent Office
Office européen
des brevets

(11) **EP 1 751 472 B1**

(12) **EUROPEAN PATENT SPECIFICATION**

(45) Date of publication and mention
of the grant of the patent:
**03.09.2008 Bulletin 2008/36**

(21) Application number: **05749820.6**

(22) Date of filing: **19.05.2005**

(51) Int Cl.:
***F24F 11/00*** (2006.01)    ***G01N 33/00*** (2006.01)

(86) International application number:
**PCT/NL2005/000379**

(87) International publication number:
**WO 2005/111513 (24.11.2005 Gazette 2005/47)**

(54) **DEMAND CONTROLLED VENTILATION SYSTEM WITH CENTRAL AIR QUALITY MEASUREMENT AND METHOD HEREFOR**

BEDARFSGESTEUERTES LÜFTUNGSSYSTEM MIT ZENTRALER LUFTQUALITÄTSMESSUNG UND VERFAHREN DAFÜR

SYSTEME DE VENTILATION COMMANDE EN FONCTION DES BESOINS AVEC MESURE DE LA QUALITE DE L'AIR ET PROCEDE ASSOCIE

(84) Designated Contracting States:
**AT BE BG CH CY CZ DE DK EE ES FI FR GB GR HU IE IS IT LI LT LU MC NL PL PT RO SE SI SK TR**

(30) Priority: **19.05.2004  NL 1026242**

(43) Date of publication of application:
**14.02.2007  Bulletin 2007/07**

(73) Proprietor: **Itho B.V.**
**3115  HB Schiedam (NL)**

(72) Inventor: **Boxhoorn, Arie**
**2645KX Delfgauw (NL)**

(74) Representative: **van Westenbrugge, Andries**
**Nederlandsch Octrooibureau**
**Postbus 29720**
**2502 LS Den Haag (NL)**

(56) References cited:
**WO-A-02/41095**          **US-A- 5 292 280**
**US-B1- 6 425 297**        **US-B1- 6 687 640**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a building ventilation system for extracting air from a number of spaces, comprising:

- a central exhaust duct and a number of local exhaust ducts that are in flow communication with the central exhaust duct;
- a measurement device for measuring a of the air;
- a number of flow regulators, each arranged to determine a flow rate in a local exhaust duct;
- a control system arranged to control the measurement device and the flow regulators.

A building ventilation system of this type is described in the patent publication WO 02/41095. In WO 02/41095 a ventilation system is described in which the air quality in various spaces in a building is measured with the aid of one central measurement system. The measurement system is connected to a separate duct system where each duct opens into a specific space for which the air quality has to be measured. The measurement system takes samples of the air in each space and analyses the samples. If the air quality is not good, measures are taken by a conditioning system. Because with such a ventilation system the amount of air is determined on the basis of the demand for fresh air, such a ventilation system is also referred to as a demand controlled ventilation system. The duct system for the measurement system is separate from the actual ventilation system. Thus, a separate pipe system has to be installed for this measurement system. This technology is thus not very suitable for existing buildings and moreover is expensive so that it is suitable/cost-effective only for large buildings.

Patent publication US 6 425 297 discloses a networked measurement system which comprises a network of tubes which may be installed next to a ventilation system in order to measure a characteristic of an air sample. The measurement system itself is not suitable to ventilate spaces, so it can not be regarded as a ventilation system.

In other known demand controlled ventilation systems use is made of multiple measurement systems that are installed locally in the individual occupied spaces. Each measurement system sends information to a central control system that adjusts the flow rate of air to be supplied for the various spaces on the basis of the air quality measured. Local installation of measurement systems is expensive as far as installation and maintenance costs are concerned.

One aim of the present invention is to provide a building ventilation system where only one central measurement device and no additional pipe system is needed for measuring the quality of the air.

Said aim is achieved with an building ventilation system as claimed by claim 1. In an embodiment the control system is arranged to perform the following steps:

(a) suitable setting of the position of one or more flow regulators at a first setting time;
(b) determination of a first measured value measured at a first measurement time that is later than the first setting time;
(c) calculation of the value of the percentage $CO_2$ in the air in at least one of the local exhaust ducts with the aid of the first measured value.

By means of suitable setting of the position of one or more flow regulators and subsequent measurement of the percentage $CO_2$ in the air in the central exhaust duct the percentage $CO_2$ in the air in the local exhaust ducts can be deduced from the measured value and the positions of the various flow regulators in the local exhaust ducts.

A building ventilation system according to the invention is an air ventilation system in a building in which, the percentage $CO_2$ in the air in specific spaces is determined. In this case it is assumed that the percentage $CO_2$ in an exhaust duct connected to a space to be ventilated virtually corresponds to the percentage $CO_2$ in that space. By means of central measurement of the percentage $CO_2$ and suitable adjustment of the flow regulators the percentage $CO_2$ in the local ducts (read exhaust ducts) can be determined and thus also the percentage $CO_2$ in the associated spaces without there having to be a sensor in the various spaces.

In another embodiment the control system is arranged to perform the following steps:

(d) determination of a second measured value measured at a second measurement time that precedes the first setting time;
(e) calculation of the value of the percentage $CO_2$ in the air in at least one of the local exhaust ducts with the aid of the first measured value and the second measured value,

wherein the position of only one flow regulator is set at the first setting time and wherein the value of the percentage $CO_2$ in the air in one of the local exhaust ducts is calculated with the aid of the first and the second measured value.
In this embodiment only one flow regulator has to be changed. The ventilation in the other local exhaust ducts, read spaces, is not influenced by the measurement.

The invention also relates to a method as described in Claim 16.

Further advantages and characteristics of the present invention will become clear on the basis of a description of a few embodiments, where reference is made to the appended drawings, where:

Fig. 1 is a diagrammatic representation of a ventilation system according to one embodiment of the invention;
Fig. 2 is a diagrammatic representation of a ventilation system according to another embodiment;

Fig. 3 is a flowchart of one embodiment of a measurement and control procedure according to the invention;

Fig. 4 is a flowchart of embodiments of a measurement procedure for local values;

Fig. 5 shows an example of measurement values over time.

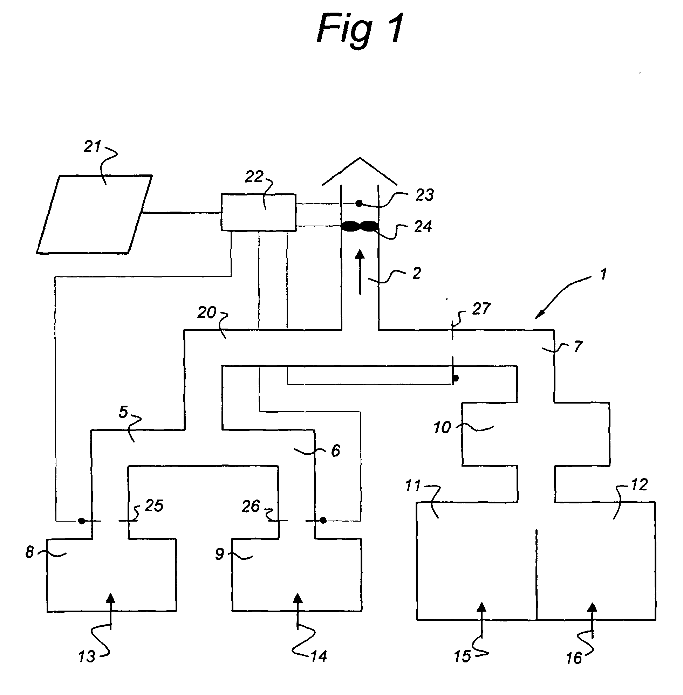

Figure 1 shows one embodiment of the present invention. In this embodiment a ventilation system 1 of a building comprises a central exhaust duct 2 and three local exhaust ducts 5, 6 and 7. The spaces 8, 9, 10, 11, 12 to be ventilated are also shown in Figure 1. Local exhaust duct 5 extracts air from space 8 and local exhaust duct 6 extracts air from space 9. Furthermore, local exhaust duct 7 extracts air from spaces 10, 11 as well as 12. Arrows 13, 14, 15 and 16 indicate where air is supplied to the spaces 8, 9, 15, 16. In practice this can be, for example, a ventilation grating or a window. The ventilation system 1 furthermore comprises three flow regulators 25, 26 and 27, for example ventilation dampers, which are positioned in the local exhaust ducts 5, 6, 7, respectively. Local exhaust ducts 5 and 6 merge into an intermediate duct 20. Intermediate duct 20 merges with the local exhaust duct 7. The embodiment in Figure 1 furthermore comprises an extract fan 24 that is arranged for the mechanical outlet of air from the building.

The flow rate in the local exhaust ducts 5, 6, 7 is determined by the position of the flow regulators 25, 26, 27 and by the fan 24 which may be present. The presence of a duct such as the intermediate duct 20 has no influence of the functioning of the invention. A duct is referred to as a "local exhaust duct" if this is in flow communication with the central exhaust duct 2 and the flow rate in the duct is determined by a local flow regulator. This local flow regulator does not have to be in the duct. It is conceivable that the flow regulator is positioned in the space that is in flow communication with the local exhaust duct.

The ventilation system 1 furthermore comprises a control system 22 and a measurement device 23, which according to the invention is installed in the central exhaust duct. The measurement device 23 contains, for example, a $CO_2$ sensor or a number of different sensors for measuring several charactenstics of air, such as temperature or air humidity. In the same measurement device 23 there can also be a sensor for measuring the amount of air or the flow rate. The control system 22 is arranged to control the measurement device 23 and the flow regulators 25, 26, 27. According to the invention the control system 22 is arranged to record values measured by the measurement device 23 at specific points in time. The control system 22 is arranged to set the positions of the flow regulators 25, 26, 27 and to control the fan 24 that may be present.

The control system can be a computer but can also consist of various interacting computers. The control system can also be completely or partially based on analogue and/or digital techniques. Communication of signals can take place via leads or be wireless.

The ventilation system 1 furthermore comprises a database 21 in which knowledge and experience relating to the ventilation system is stored. Algorithms that make use of such knowledge and experience are also referred to as ventilation protocols. With the aid of various ventilation protocols the control system 22 is able to measure and control the ventilation system in an optimum manner. The possible ventilation protocols are stored in the database 21. Various types of ventilation protocols are discussed in more detail in the description further below.

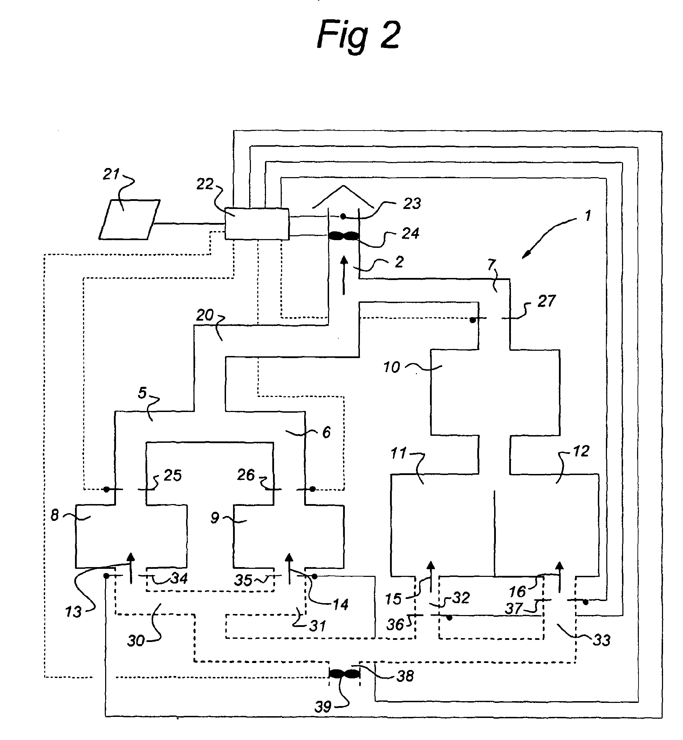

Figure 2 shows another embodiment of the invention. Here the ventilation system 1 from Figure 1 also comprises an inlet system with a number of local inlet ducts 30, 31, 32, 33. Inlet flow regulators 34, 35, 36, 37 are fitted in the local inlet ducts. The inlet flow regulators 34, 35, 36, 37 determine the flow rates in the ducts 30, 31, 32, 33, respectively. The inlet system furthermore comprises a central inlet duct 38 in which an inlet fan 39 has been installed. The inlet fan 39 is controlled by control system 22. In use the inlet fan 39 is set such that the amount of air fed into the building is equal to the amount of air extracted through central exhaust duct 2.

It will be clear that the invention can also be used in a ventilation system with mechanical outlet and natural inlet of air. In that case a local inlet duct can consist, for example, merely of an inlet grating or a window. It will be possible to use the principle of the invention even with a system which makes use solely of natural ventilation. In that case the central inlet duct 38 and the inlet fan 39 are absent. Usually a sensor that measures the volume flow will then be installed in the central exhaust duct.

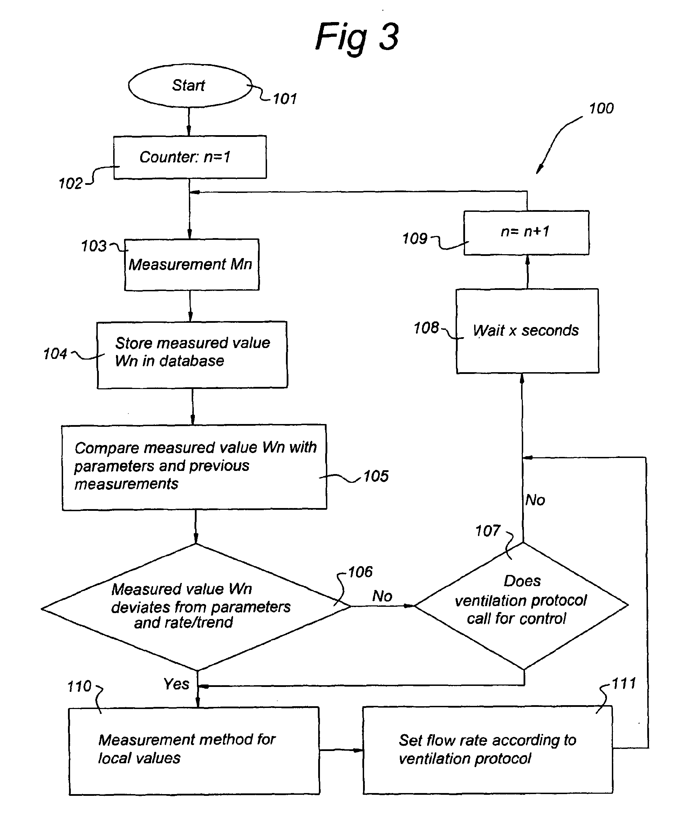

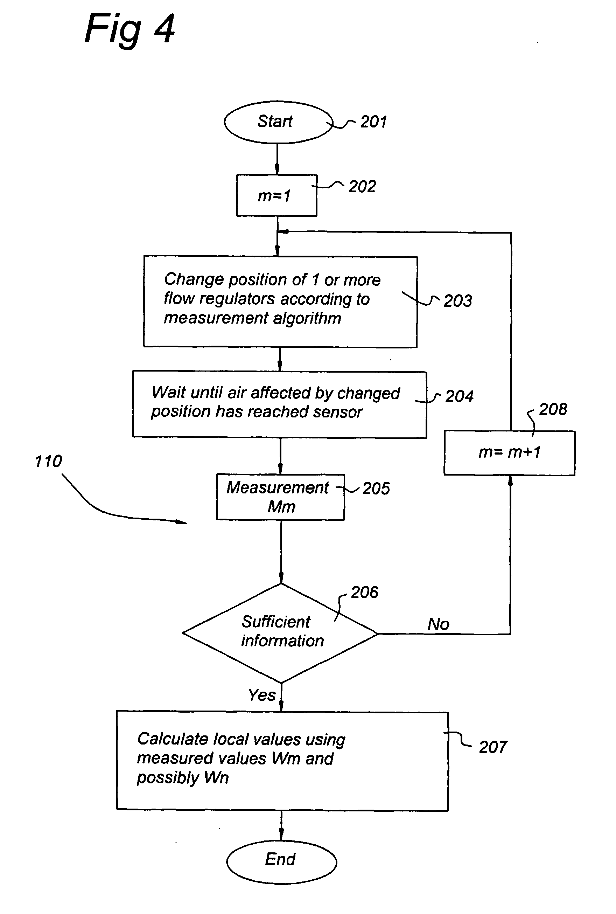

Figure 3 shows a flowchart of the functioning of one embodiment where the control system 22 is arranged to calculate a characteristic of the air, such as, for example, the percentage $CO_2$ in the air. The control system 22 is furthermore arranged to control the positions of the flow regulators 25, 26, 27 and of the fan 22 depending on the calculated values of the characteristic of the air. In this case the control system 22 is thus a measurement and control system. Figure 3 shows a measurement and control procedure 100 that starts with a start-up procedure 101 and a counter n is then initialised, for example set to 1, in step 102. A measurement $m_n$ in the central exhaust duct 2 then follows in step 103. In step 104 the measured value $W_n$ for measurement $m_n$ is stored in the database 21. It is pointed out that measured values can also be stored in an arbitrary memory location in the control system. Thus, this does not necessarily have to be in the database. In a following step, see step 105, the measured value $W_n$ is compared with a parameter, such as an upper and a lower threshold value. It is also possible that the measured value $W_n$ is compared with previous measurements. In a step 106 a test is then carried out to determine whether the measured value $W_n$ exceeds, for example, an upper threshold value or is below a lower threshold value. If this is not (yet) so, a step 107 then follows in which a check is carried out to determine whether a valid ventilation protocol calls for a specific control. If this is not so, a step 108 then follows in which there is a wait of a specific number of seconds. A step 109 then follows in which the counter n is incremented by 1. After step 109, step 103 follows again. In step 106 it is also possible to look to see whether a specific trend, for example a rapid increase, in the measured values can be ascertained. If this is not so, step 107 then also follows. If a specific threshold value is reached or if a specific trend is ascertained in step 106, a step 110 then follows in which a measurement procedure for local values is carried out. In this measurement procedure 110 one or more central measurements are carried out whilst the positions of the flow regulators are suitably set. This step is described in more detail in Figure 4. Step 110 also follows after step 107 if it is found in step 107 that a valid ventilation protocol gives cause for control. After the local values, for example the percentage $CO_2$, have been determined in various areas in a building, a control step 111 follows in which the ventilation level and the flow rates in the local exhaust ducts 5, 6, 7 and/or inlet ducts 30, 31, 32, 33 are set. Control of the flow regulators is effected with the aid of the calculated value for, for example, the percentage $CO_2$ in the exhaust ducts 5, 6, 7 and the valid ventilation protocol.

An embodiment of the measurement procedure 110 for determining the local values is described in Figure 4 with the aid of a flowchart. The measurement procedure 110 starts at step 201. In a step 202 a counter m is then set to one. A step 203 then follows in which the position of one or more flow regulators is changed. The flow regulators can be set in accordance with a specific measurement algorithm. It is possible, for example, to indicate in a measurement algorithm which space, read exhaust duct, has to be measured first. Exceeding, for example, an upper threshold value for air humidity can be the reason for first measuring a local exhaust duct that extracts air from a shower room. If it is found that exceeding the threshold value is a direct consequence of the increase in the humidity in the shower room, no further measurements are then necessary. The requisite settings of the fan and flow regulators to bring the air qualities and characteristics to the desired level in the various spaces can then already be determined. In this way it is possible with the aid of knowledge of the structure of the ventilation system and knowledge of the characteristics of the air to be measured to measure rapidly and in a targeted manner without being tied to a specific fixed measurement sequence. The said knowledge can have been stored in the database 21, see Figures 1 and 2. After step 203, there is a wait in step 204 until it is certain that air that passes the changed flow regulators after the position of the flow regulators has been changed has reached the central measurement device 23. A measurement $m_n$ is

then carried out, see step 205. This measurement $m_n$ yields a measured value $W_n$ that is stored by the control system. In a decision step 206 a check is now made to determine whether sufficient information has been obtained by the measurements. If this is not yet the case, a step 208 follows in which the counter m is incremented by one. Step 203 is then carried out again. If there is sufficient information in step 206 to be able to determine the value of, for example, the percentage $CO_2$ in all local exhaust ducts, a step 207 follows. In step 207 the percentage $CO_2$ in the local exhaust ducts is determined with the aid of the measured values obtained. Here use can also be made of measured values $W_n$ that have been stored in the database in step 104.

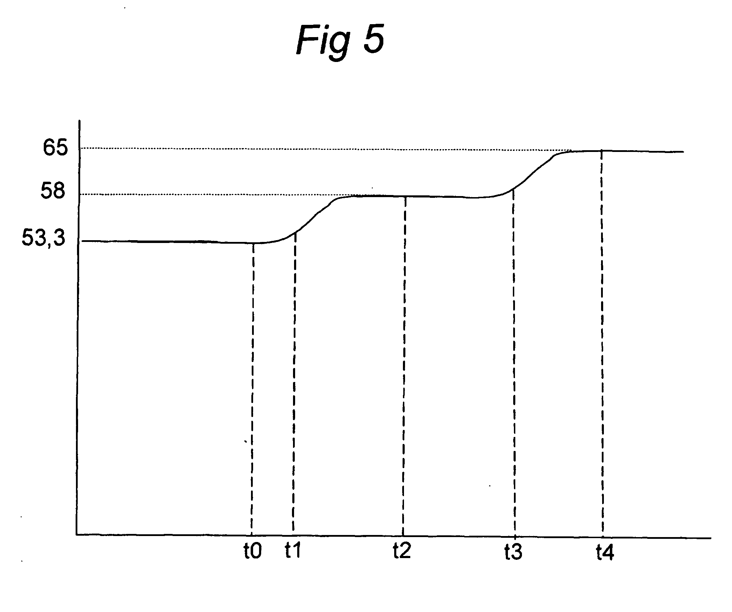

An example of the abovementioned measurement procedure will now be described with the aid of Figure 5. The starting point here is a ventilation system with three local exhaust ducts X, Y and Z. The extract fan 24 can be so controlled by the control system 22 that the pressure in the central exhaust duct 2 is constant. With this setting a change in flow rate in a specific local exhaust duct will not influence the air stream in the other ducts. It is also possible that the fan 24 is so controlled by control system 22 that this gives rise to a specific extract stream to which the various flow regulators are tuned by the control system. Yet another possibility is that the setting of the flow regulators and/or the fan by the control system 22 is made partly dependent on the air flow measured via the central measurement device 23 or in the various exhaust ducts. The degree of contamination of the air flowing through the exhaust ducts is represented by $V_x$, $V_y$ and $V_z$, respectively. It is assumed that a V value of 0 corresponds to completely fresh air and of 100 to completely contaminated air. At a measurement time to a value $W(t_0)$ of 53.3 is measured. At this time the positions of the flow regulators are such that 2 dm$^3$/sec flows through duct X, 3 dm$^3$/sec through duct Y and 1 dm$^3$/sec through duct Z. At a setting time $t_1$ the flow rate in duct Y is then reduced to 2 dm$^3$/sec. A measurement, specifically a value $W(t_2)$ of 58, is then measured at a later time $t_2$. At a setting time $t_3$ the flow rate in duct Y is then reduced to 1 dm$^3$/sec. A value $W(t_4)$ of 65 is then measured at a measurement time $t_4$. The following equations have now been produced:

$$(2V_x + 3V_y + V_z)/6 = 53.3$$

$$(2V_x + 2V_y + V_z)/5 = 58$$

$$(2V_x + V_y + V_z)/4 = 65$$

In step 206 it will now be established that sufficient measurements have been carried out. The control system 22 can now calculate the three variables $V_x$. $V_y$ and $V_z$ using the three abovementioned equations. It follows: $V_x$ = 90, $V_y$ = 30 and $V_z$ = 50 degrees of contamination.

In the above example the positions of the flow regulators were changed in such a way that none of the local exhaust ducts was closed off. The measurements thus do not give rise to an interruption in the ventilation of the spaces concerned. However, it is also possible, for example, to close the flow regulator in duct Y completely at time $t_1$ and to restore this to the original position again at time $t_3$, whilst at that time the flow regulator for duct Z is completely closed. By now performing the same measurements as in the first example, three equations with three unknowns are also produced. The advantage of such a variant is that with a system with a relatively large number of ducts it is still possible to achieve a desired measurement resolution without a highly sensitive measurement installation being required.

In another embodiment the control system 22 sets the position of one or more flow regulators in a suitable manner at a first setting time $t_1$. A first measured value is then determined, measured at a first measurement time $t_2$ that comes after the first setting time $t_1$. The value of the characteristic of the air in at least one of the local exhaust ducts is then calculated with the aid of the first measured value. One example of such an embodiment is that where the control system 22 closes all flow regulators except one at the first setting time $t_1$. A value is then measured at measurement time $t_2$. The measured value $W(t_2)$ is now a direct measure for the characteristic of the air to be determined in said one local exhaust duct. In a further embodiment the control system 22 determines a second measured value at a second measurement time to that precedes the first setting time $t_1$. The value of the characteristic of the air in at least one of the local exhaust ducts is then calculated with the aid of the first measured value and the second measured value.

In a simple embodiment the position of only one flow regulator is set at the first setting time $t_1$. The value of the characteristic of the air in one of the local exhaust ducts corresponding to the one flow regulator is now calculated with the aid of the first and the second measured value.

In one embodiment the control system 22 is arranged to control the positions of one or more flow regulators depending on the calculated value(s) of the characteristic of the air in one of the local exhaust ducts and depending on a process parameter. The process parameter is, for example, a threshold value for the characteristic to be measured. If the measured value exceeds an upper threshold value or is below a specific lower threshold value, the control system will start to control the flow regulators. With this arrangement the flow regulators are set in an optimum manner so that the local values in the ventilation system again fall within the desired limits. It is pointed out that the flow regulators are thus controlled by the control system 22 both in the measurement procedure and in the control procedure.

The abovementioned process parameter can also be a specific measurement trend. In this case the measured values are stored and compared over time. If a value of a specific characteristic rises to a relatively large extent, for example, it can then be the case that a specific action has to be taken even before a specific threshold value has been exceeded. For example, if a rapid rise in the air humidity and at the same time a rapid rise in the temperature is measured in a dwelling with a ventilation system according to the invention and no change in the percentage $CO_2$ is measured, it can then be decided with the aid of knowledge of the ventilation system (such as: duct 7 ventilates a bathroom 10) to measure duct 7 first. If it is found by a single measurement of the local value in the duct 7 that the rise in the air humidity and the rise in temperature are mainly caused by activity in the bathroom, the control system will then be able to make adjustments immediately. The other rooms now do not have to be measured. This major advantage is the consequence of the knowledge of the ventilation system and more general knowledge of air quality. This knowledge can be stored in the database 21 in the form of measurement algorithms and/or ventilation protocols. Use can also be made of knowledge of the ventilation system and general knowledge when controlling the flow regulators (thus during the control procedure). Two possible control situations that are possible with the ventilation system according to the invention will be described below.

If the temperature of the outside air in the summer is lower than the temperature of the inside air, ventilation will then be augmented, the temperature in bedrooms being lowered first (down to, for example, 16 degrees or a number of degrees higher than the outside air) and then ventilation in a living room will be augmented. This control is called night cooling. It is also possible that if the temperature of the outside air is at least 2 °C lower than the temperature of the inside air, and the temperature of the inside air is higher than 23 °C, ventilation will then be augmented. This control is also called summer cooling.

Measures that have to be carried out by the control system 22 are incorporated in a so-called ventilation protocol in one embodiment. This ventilation protocol can also include, inter alia, the following parameters in addition to the knowledge already mentioned:

- threshold values for the characteristics to be measured;
- minimum ventilation values per local exhaust duct;
- step sizes for control of the flow regulators.

The threshold values can be dependent on time. One example is the seasonal control where the temperature in a building in the summer may be higher than in the winter. A ventilation protocol can also specify how frequently measurements have to be carried out. Furthermore, it is possible that the protocol contains knowledge on the average number of people in a specific area.

In a further embodiment of the building ventilation system according to the invention the control system 22 is arranged to determine the position of one or more flow regulators with the aid of measurements from the past. By storing measurements and controls from the past and performing analyses on these, a control system is able to control increasingly intelligently (that is to say in a more optimum and/or more efficient manner).

**Claims**

1. Building ventilation system (1) for extracting air from a number of spaces (10, 13, 14, 15, 16) in a building, comprising:

   - a central exhaust duct (2) and a number of local exhaust ducts (5, 6, 7) that are in flow communication with the central exhaust duct (2);
   - a measurement device (23) for measuring the percentage $CO_2$ in the air;
   - a number of flow regulators (25, 26, 27), each arranged to determine a flow rate in a local exhaust duct (5, 6, 7);
   - a control system (22) arranged to control the measurement device (23) and the flow regulators (25, 26, 27),

   **characterised in that** the measurement device (23) is installed in the central exhaust duct (2) and that the control system (22) is arranged to determine a sequence for the setting of the position of one or more of said flow regulators (25, 26, 27) and to calculate a value of the percentage $CO_2$ in the air in at least one of the local exhaust ducts (5, 6, 7) with the aid of measured values of said perrentage $CO_2$ measured in the central exhaust duct (2) during said sequence.

2. Building ventilation system according to claim 1, wherein the control system (22) is arranged to perform the following steps:(a) suitable setting of the position of one or more of said flow regulators (25, 26, 27) at a first setting time $(t_1)$;

   (b) determination of a first measured value measured at a first measurement time $(t_2)$ that is later than the first setting time $(t_1)$;
   (c) calculation of the value of the percentage $CO_2$ in the air in at least one of the local exhaust ducts (5, 6, 7) with the aid of the first measured value.

3. Building ventilation system according to Claim 2, wherein the control system (22) is arranged to perform the following steps:

   (d) determination of a second measured value measured at a second measurement time $(t_0)$ that precedes the first setting time $(t_1)$;
   (e) calculation of the value of the percentage $CO_2$ in the air in at least one of the local exhaust ducts (5, 6, 7) with the aid of the first measured value and the second measured value.

4. Building ventilation system (1) according to Claim 3, wherein the position of only one flow regulator (25, 26, 27) is set at the first setting time $(t_1)$ and wherein the value of the percentage $CO_2$ in the air in one of the local exhaust ducts (5, 6, 7) is calculated with the aid of the first and the second measured value.

5. Building ventilation system (1) according to Claim 3, wherein the control system (22) is arranged to perform:

   - N repetitions of steps (a) and (b) so that N measured values are determined, where N is the number of local exhaust ducts, and
   - calculation of the value of the percentage $CO_2$ in the air in N local exhaust ducts (5, 6, 7) with the aid of the N measured values.

6. Building ventilation system (1) according to any of the preceding claims, wherein the positions of the flow regulators are changed in such a way that none of the local exhaust ducts are closed off.

7. Building ventilation system (1) according to any of the preceding claims, wherein the control system (22) is arranged to determine said sequence for the setting of the position of one or more of said flow regulators (25, 26, 27) with the aid of a measurement algorithm and knowledge of the ventilation system (1).

8. Building ventilation system (1) according to any of the preceding claims, wherein the control system (22) is arranged to control the positions of one or more of said flow regulators (25, 26, 27) depending on the calculated value(s) of the percentage $CO_2$ in the air in one of the local exhaust ducts (5, 6, 7) and depending on a process parameter.

9. Building ventilation system according to Claim 8, wherein the process parameter is a threshold value for the characteristic to be measured.

10. Building ventilation system (1) according to one of Claims 8-9, wherein the process parameter is a measurement trend.

11. Building ventilation system according to one of Claims 8 - 10, comprising an inlet system comprising:

- a number of local inlet ducts (30, 31, 32, 33) for feeding air to a space;
- a number of inlet flow regulators (34, 35, 36, 37), each arranged to determine a flow rate in a local inlet duct (30, 31, 32, 33),

wherein the control system (22) is arranged to control the inlet flow regulators (34, 35, 36, 37).

12. Building ventilation system (1) according to Claim 11, wherein the inlet system comprises a central inlet duct (38) and a fan (39) arranged in the central inlet duct (38).

13. Building ventilation system (1) according to one of Claims 8 - 12, wherein the control system (22) is arranged to control the positions of the flow regulators (25, 26, 27) with the aid of a ventilation protocol, wherein the ventilation protocol comprises at least one of the following parameters:

- threshold values for the percentage $CO_2$ to be measured;
- minimum ventilation values per local exhaust duct (5, 6, 7);
- step sizes for controlling the flow regulators (25, 26, 27).

14. Building ventilation system (1) according to Claim 9 or 13, wherein the threshold values are dependent on time.

15. Building ventilation system (1) according to one of Claims 8 - 14, wherein the control system (22) is arranged to determine the position of one or more flow regulators (25, 26, 27) with the aid of measurements from the past.

16. Method for determining a percentage $CO_2$ in air flowing, at least in use, in a building ventilation system (1), wherein the building ventilation system (1) comprises a central exhaust duct (2) and a number of local exhaust ducts (5, 6, 7) that are in flow communication with the central exhaust duct (2), and a number of flow regulators (25, 26, 27) each corresponding to a local exhaust duct (5, 6, 7), **characterised by**:

- determining a sequence for the setting of the position of one or more of said flow regulators;
- measurement of the percentage $CO_2$ in air in the central exhaust duct (2);
- calculating a value of the percentage $CO_2$ in the air in at least one of the local exhaust ducts (5, 6, 7) with the aid of measured values of said percentage $CO_2$ measured in the central exhaust duct (2) during said sequence.

17. Method according to claim 16, wherein said method comprises the following steps:

- suitable setting of the position of one or more of said flow regulators (25, 26, 27) at a first setting time ($t_1$);
- measurement of the percentage $CO_2$ in the air in the central exhaust duct (2) at a first measurement time ($t_2$) that is later than the first setting time ($t_1$);
- calculation of a value of the percentage $CO_2$ in the air in at least one of the local exhaust ducts (5, 6, 7) with the aid of a value measured in the central exhaust duct (2).

**Patentansprüche**

1. Gebäudelüftungssystem (1) zum Entziehen von Luft aus einer Anzahl von Räumen (10, 13, 14, 15, 16) in einem Gebäude mit:

- einem zentralen Auslasskanal (2) und einer Anzahl von lokalen Auslasskanälen (5, 6, 7), die mit dem zentralen Auslasskanal (2) in Strömungsverbindung stehen;
- einer Messvorrichtung (23) zum Messen des Prozentsatzes an $CO_2$ in der Luft;
- einer Anzahl von Durchflussreglern (25, 26, 27), die jeweils zum Bestimmen einer Durchflussrate in einem lokalen Auslasskanal (5, 6, 7) angeordnet sind;
- einem Steuersystem (22), das zum Steuern der Messvorrichtung (23) und der Durchflussregler (25, 26, 27) beschaffen ist,

**dadurch gekennzeichnet, dass** die Messvorrichtung (23) im zentralen Auslasskanal (2) installiert ist und dass das Steuersystem (22) zum Bestimmen einer Sequenz für die Festlegung der Position von einem oder mehreren der Durchflussregler (25, 26, 27) und zum Berechnen eines Werts des Prozentsatzes an $CO_2$ in der Luft in mindestens einem der lokalen Auslasskanäle (5, 6, 7) mit Hilfe der gemessenen Werte des Prozentsatzes an $CO_2$, die im zentralen Auslasskanal (2) während der Sequenz gemessen werden, beschaffen ist.

2. Gebäudelüftungssystem nach Anspruch 1, wobei das Steuersystem (22) zum Durchführen der folgenden Schritte beschaffen ist: (a) geeignetes Festlegen der Position von einem oder mehreren der Durchflussregler (25, 26, 27) zu einem ersten Festlegungszeitpunkt ($t_1$);

(b) Bestimmung eines ersten gemessenen Werts, der zu einem ersten Messzeitpunkt ($t_2$) gemessen wird, der später als der erste Festle-

gungszeitpunkt ($t_1$) ist;

(c) Berechnung des Werts des Prozentsatzes an $CO_2$ in der Luft in mindestens einem der lokalen Auslasskanäle (5, 6, 7) mit Hilfe des ersten gemessenen Werts.

3. Gebäudelüftungssystem nach Anspruch 2, wobei das Steuersystem (22) zum Durchführen der folgenden Schritte beschaffen ist:

(d) Bestimmung eines zweiten gemessenen Werts, der zu einem zweiten Messzeitpunkt ($t_0$) gemessen wird, der dem ersten Festlegungszeitpunkt ($t_1$) vorangeht;

(e) Berechnung des Werts des Prozentsatzes an $CO_2$ in der Luft in mindestens einem der lokalen Auslasskanäle (5, 6, 7) mit Hilfe des ersten gemessenen Werts und des zweiten gemessenen Werts.

4. Gebäudelüftungssystem (1) nach Anspruch 3, wobei die Position von nur einem Durchflussregler (25, 26, 27) zum ersten Festlegungszeitpunkt ($t_1$) festgelegt wird und wobei der Wert des Prozentsatzes an $CO_2$ in der Luft in einem der lokalen Auslasskanäle (5, 6, 7) mit Hilfe des ersten und des zweiten gemessenen Werts berechnet wird.

5. Gebäudelüftungssystem (1) nach Anspruch 3, wobei das Steuersystem (22) beschaffen ist zum Durchführen:

- von N Wiederholungen der Schritte (a) und (b), so dass N gemessene Werte ermittelt werden, wobei N die Anzahl von lokalen Auslasskanälen ist, und
- der Berechnung des Werts des Prozentsatzes an $CO_2$ in der Luft in N lokalen Auslasskanälen (5, 6, 7) mit Hilfe der N gemessenen Werte.

6. Gebäudelüftungssystem (1) nach einem der vorangehenden Ansprüche, wobei die Positionen der Durchflussregler in einer solchen Weise verändert werden, dass keiner der lokalen Auslasskanäle verschlossen wird.

7. Gebäudelüftungssystem (1) nach einem der vorangehenden Ansprüche, wobei das Steuersystem (22) zum Bestimmen der Sequenz für die Festlegung der Position von einem oder mehreren der Durchflussregler (25, 26, 27) mit Hilfe eines Messalgorithmus und der Kenntnis des Lüftungssystems (1) beschaffen ist.

8. Gebäudelüftungssystem (1) nach einem der vorangehenden Ansprüche, wobei das Steuersystem (22) zum Steuern der Positionen von einem oder mehreren der Durchflussregler (25, 26, 27) in Abhängigkeit von dem (den) berechneten Wert(en) des Prozentsatzes an $CO_2$ in der Luft in einem der lokalen Auslasskanäle (5, 6, 7) und in Abhängigkeit von einem Prozessparameter beschaffen ist.

9. Gebäudelüftungssystem nach Anspruch 8, wobei der Prozessparameter ein Schwellenwert für Prozentsatz an $CO_2$ ist.

10. Gebäudelüftungssystem (1) nach einem der Ansprüche 8-9, wobei der Prozessparameter ein Messtrend ist.

11. Gebäudelüftungssystem nach einem der Ansprüche 8 - 10 mit einem Einlasssystem, das umfasst:

- eine Anzahl von lokalen Einlasskanälen (30, 31, 32, 33) zum Zuführen von Luft zu einem Raum;
- eine Anzahl von Einlassdurchflussreglern (34, 35, 36, 37), die jeweils zum Bestimmen einer Durchflussrate in einem lokalen Einlasskanal (30, 31, 32, 33) beschaffen sind,

wobei das Steuersystem (22) zum Steuern der Einlassdurchflussregler (34, 35, 36, 37) beschaffen ist.

12. Gebäudelüftungssystem (1) nach Anspruch 11, wobei das Einlasssystem einen zentralen Einlasskanal (38) und ein Gebläse (39), das im zentralen Einlasskanal (38) angeordnet ist, umfasst.

13. Gebäudelüftungssystem (1) nach einem der Ansprüche 8 - 12, wobei das Steuersystem (22) zum Steuern der Positionen der Durchflussregler (25, 26, 27) mit Hilfe eines Lüftungsprotokolls beschaffen ist, wobei das Lüftungsprotokoll mindestens einen der folgenden Parameter umfasst:

- Schwellenwerte für den zu messenden Prozentsatz an $CO_2$;
- minimale Lüftungswerte pro lokalem Auslasskanal (5, 6, 7);
- Schrittgrößen zum Steuern der Durchflussregler (25, 26, 27).

14. Gebäudelüftungssystem (1) nach Anspruch 9 oder 13, wobei die Schwellenwerte von der Zeit abhängen.

15. Gebäudelüftungssystem (1) nach einem der Ansprüche 8 - 14, wobei das Steuersystem (22) zum Bestimmen der Position von einem oder mehreren Durchflussreglern (25, 26, 27) mit Hilfe von Messungen aus der Vergangenheit beschaffen ist.

16. Verfahren zum Ermitteln eines Prozentsatzes an $CO_2$ in Luft, die zumindest bei der Verwendung in einem Gebäudelüftungssystem (1) strömt, wobei das Gebäudelüftungssystem (1) einen zentralen Auslasskanal (2) und eine Anzahl von lokalen Auslasskanälen (5, 6, 7), die mit dem zentralen Auslasskanal (2) in Strömungsverbindung stehen, und eine Anzahl von Durchflussreglern (25, 26, 27), die jeweils einem lokalen Auslasskanal (5, 6, 7) entsprechen, umfasst, **gekennzeichnet durch**:

- Bestimmen einer Sequenz für die Festlegung der Position von einem oder mehreren der Durchflussregler;
- Messung des Prozentsatzes an $CO_2$ in Luft in dem zentralen Auslasskanal (2);
- Berechnen eines Werts des Prozentsatzes an $CO_2$ in der Luft in mindestens einem der lokalen Auslasskanäle (5, 6, 7) mit Hilfe von gemessenen Werten des während der Sequenz im zentralen Auslasskanal (2) gemessenen Prozentsatzes an $CO_2$.

**17.** Verfahren nach Anspruch 16, wobei das Verfahren die folgenden Schritte umfasst:

- geeignete Festlegung der Position von einem oder mehreren der Durchflussregler (25, 26, 27) zu einem ersten Festlegungszeitpunkt ($t_1$);
- Messung des Prozentsatzes an $CO_2$ in der Luft im zentralen Auslasskanal (2) zu einem ersten Messzeitpunkt ($t_2$), der später als der erste Festlegungszeitpunkt ($t_1$) ist;
- Berechnung eines Werts des Prozentsatzes an $CO_2$ in der Luft in mindestens einem der lokalen Auslasskanäle (5, 6, 7) mit Hilfe eines im zentralen Auslasskanal (2) gemessenen Werts.

**Revendications**

**1.** Système de ventilation d'un bâtiment (1) servant à extraire l'air d'un certain nombre d'espaces (10, 13, 14, 15, 16) dans un bâtiment, comprenant :

- un conduit d'évacuation central (2) et un certain nombre de conduits d'évacuation locaux (5, 6, 7) qui sont en communication fluidique avec le conduit d'évacuation central (2) ;
- un dispositif de mesure (23) servant à mesurer le pourcentage de $CO_2$ dans l'air ;
- un certain nombre de régulateurs de débit (25, 26, 27), chacun étant conçu pour déterminer un débit dans un conduit d'évacuation local (5, 6, 7) ;
- un système de commande (22) conçu pour commander le dispositif de mesure (23) et les régulateurs de débit (25, 26, 27),

**caractérisé en ce que** le dispositif de mesure (23) est installé dans le conduit d'évacuation central (2) et **en ce que** le système de commande (22) est conçu pour déterminer une séquence pour le réglage de la position d'un ou de plusieurs desdits régulateurs de débit (25, 26, 27) et calculer une valeur du pourcentage de $CO_2$ dans l'air dans au moins un des conduits d'évacuation locaux (5, 6, 7) à l'aide des valeurs mesurées dudit pourcentage de $CO_2$ mesuré dans le conduit d'évacuation central (2) pendant ladite séquence.

**2.** Système de ventilation d'un bâtiment selon la revendication 1, dans lequel le système de commande (22) est conçu pour réaliser les étapes suivantes :
(a) réglage adéquat de la position d'un ou de plusieurs desdits régulateurs de débit (25, 26, 27) à un premier temps de réglage ($t_1$) ;

(b) détermination d'une première valeur mesurée, mesurée à un premier temps de mesure ($t_2$) qui est postérieur au premier temps de réglage ($t_1$) ;
(c) calcul de la valeur du pourcentage de $CO_2$ dans l'air dans au moins un des conduits d'évacuation locaux (5, 6, 7) à l'aide de la première valeur mesurée.

**3.** Système de ventilation d'un bâtiment selon la revendication 2, dans lequel le système de commande (22) est conçu pour réaliser les étapes suivantes :

(d) détermination d'une deuxième valeur mesurée, mesurée à un deuxième temps de mesure ($t_0$) qui précède le premier temps de réglage ($t_1$) ;
(e) calcul de la valeur du pourcentage de $CO_2$ dans l'air dans au moins un des conduits d'évacuation locaux (5, 6, 7) à l'aide de la première valeur mesurée et de la deuxième valeur mesurée.

**4.** Système de ventilation d'un bâtiment (1) selon la revendication 3, dans lequel la position d'un seul régulateur de débit (25, 26, 27) est réglée au premier temps de réglage ($t_1$) et dans lequel la valeur du pourcentage de $CO_2$ dans l'air dans un des conduits d'évacuation locaux (5, 6, 7) est calculée à l'aide de la première et de la deuxième valeur mesurée.

**5.** Système de ventilation d'un bâtiment (1) selon la revendication 3, dans lequel le système de commande (22) est conçu pour réaliser :

- N répétitions des étapes (a) et (b) de sorte à déterminer N valeurs mesurées, N étant le nombre de conduits d'évacuation locaux, et
- le calcul de la valeur du pourcentage de $CO_2$ dans l'air dans N conduits d'évacuation locaux

**9**

(5, 6, 7) à l'aide des N valeurs mesurées.

6. Système de ventilation d'un bâtiment (1) selon l'une quelconque des revendications précédentes, dans lequel les positions des régulateurs de débit sont modifiées de telle manière qu'aucun des conduits d'évacuation locaux n'est fermé.

7. Système de ventilation d'un bâtiment (1) selon l'une quelconque des revendications précédentes, dans lequel le système de commande (22) est conçu pour déterminer ladite séquence pour le réglage de la position d'un ou de plusieurs desdits régulateurs de débit (25, 26, 27) à l'aide d'un algorithme de mesure et de la connaissance du système de ventilation (1).

8. Système de ventilation d'un bâtiment (1) selon l'une quelconque des revendications précédentes, dans lequel le système de commande (22) est conçu pour commander les positions d'un ou de plusieurs desdits régulateurs de débit (25, 26, 27) en fonction de la (des) valeur(s) calculée(s) du pourcentage de $CO_2$ dans l'air dans un des conduits d'évacuation locaux (5, 6, 7) et en fonction d'un paramètre du processus.

9. Système de ventilation d'un bâtiment selon la revendication 8, dans lequel le paramètre du processus est une valeur seuil pour la caractéristique à mesurer.

10. Système de ventilation d'un bâtiment (1) selon l'une quelconque des revendications 8 à 9, dans lequel le paramètre du processus est une tendance de mesure.

11. Système de ventilation d'un bâtiment selon l'une quelconque des revendications 8 à 10, comprenant un système d'entrée comportant :

   - un certain nombre de conduits d'entrée locaux (30, 31, 32, 33) servant à alimenter un espace en air ;
   - un certain nombre de régulateurs de débit d'entrée (34, 35, 36, 37), chacun étant conçu pour déterminer un débit dans un conduit d'entrée local (30, 31, 32, 33),

   dans lequel le système de commande (22) est conçu pour commander les régulateurs de débit d'entrée (34, 35, 36, 37).

12. Système de ventilation d'un bâtiment (1) selon la revendication 11, dans lequel le système d'entrée comprend un conduit d'entrée central (38) et un ventilateur (39) agencé dans le conduit d'entrée central (38).

13. Système de ventilation d'un bâtiment (1) selon l'une quelconque des revendications 8 à 12, dans lequel le système de commande (22) est conçu pour commander les positions des régulateurs de débit (25, 26, 27) à l'aide d'un protocole de ventilation, le protocole de ventilation comprenant au moins un des paramètres suivants :

   - valeurs seuils pour le pourcentage de $CO_2$ à mesurer ;
   - valeurs de ventilation minimum par conduit d'évacuation local (5, 6, 7) ;
   - tailles de pas pour la commande des régulateurs de débit (25, 26, 27).

14. Système de ventilation d'un bâtiment (1) selon la revendication 9 ou 13, dans lequel les valeurs seuils dépendent du temps.

15. Système de ventilation d'un bâtiment (1) selon l'une quelconque des revendications 8 à 14, dans lequel le système de commande (22) est conçu pour déterminer la position d'un ou de plusieurs régulateurs de débit (25, 26, 27) à l'aide d'anciennes mesures.

16. Procédé de détermination d'un pourcentage de $CO_2$ dans l'air s'écoulant, au moins en fonctionnement, dans un système de ventilation d'un bâtiment (1), dans lequel le système de ventilation d'un bâtiment (1) comprend un conduit d'évacuation central (2) et un certain nombre de conduits d'évacuation locaux (5, 6, 7) qui sont en communication fluidique avec le conduit d'évacuation central (2) et un certain nombre de régulateurs de débit (25, 26, 27) correspondant chacun à un conduit d'évacuation local (5, 6, 7), **caractérisé par** :

   - la détermination d'une séquence pour le réglage de la position d'un ou de plusieurs desdits régulateurs de débit ;
   - mesure du pourcentage de $CO_2$ dans l'air dans le conduit d'évacuation central (2) ;
   - calcul d'une valeur du pourcentage de $CO_2$ dans l'air dans au moins un des conduits d'évacuation locaux (5, 6, 7) à l'aide de valeurs mesurées dudit pourcentage de $CO_2$ mesuré dans le conduit d'évacuation central (2) pendant ladite séquence.

17. Procédé selon la revendication 16, dans lequel ledit procédé comprend les étapes suivantes :

   - réglage adéquat de la position d'un ou de plusieurs desdits régulateurs de débit (25, 26, 27) à un premier temps de réglage ($t_1$) ;
   - mesure du pourcentage de $CO_2$ dans l'air dans le conduit d'évacuation central (2) à un premier temps de mesure ($t_2$) qui est postérieur au premier temps de réglage ($t_1$) ;

- calcul d'une valeur du pourcentage de $CO_2$ dans l'air dans au moins un des conduits d'évacuation locaux (5, 6, 7) à l'aide d'une valeur mesurée dans le conduit d'évacuation central (2).

# Fig 1

# Fig 2

# Fig 3

```
         Start  ──101
           │
           ▼
102──┐ Counter: n=1                              100
           │                            109──┐ n= n+1
           ▼                                      │
103──┐ Measurement Mn                             │
           │                            108──┐ Wait x seconds
           ▼                                      │
104──┐ Store measured value                       │
       Wn in database                    No
           │                                      │
           ▼                            107──┐ Does
       Compare measured value Wn with           ventilation protocol
       parameters and previous ──105            call for control
       measurements
           │                               No
           ▼
   106──┐                          
   Measured value Wn        No              
   deviates from parameters  ──────────────►
   and rate/trend

110──┐   Yes                              111──┐
   Measurement method for            Set flow rate according to
   local values                      ventilation protocol
```

# Fig 4

Start — 201

m=1 — 202

Change position of 1 or more
flow regulators according to
measurement algorithm — 203

Wait until air affected by changed
position has reached sensor — 204

110

Measurement
Mm — 205

m= m+1 — 208

Sufficient
information — 206

No

Yes

Calculate local values using
measured values Wm and
possibly Wn — 207

End

## Fig 5

EP 1 751 472 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0241095 A

- US 6425297 B